# EUROPEAN PATENT APPLICATION

(11) **EP 3 800 365 A1**
(43) Date of publication of application: **07.04.2021**
(21) Application number: 20197065.4
(22) Date of filing: 18.09.2020
(51) Int. Cl.: F16C 33/58, F16C 33/76, F16C 35/06

(54) **STEADY BEARING ASSEMBLIES**

(30) Priority: 26.09.2019 GB 201913878
(71) Applicant: Sinophos Projects Ltd, Runcorn, Cheshire WA7 4QX (GB)
(72) Inventor: McGee, John, Runcorn, Cheshire WA7 4QX (GB); Riley, David, Runcorn, Cheshire WA7 4QX (GB)
(74) Representative: Barker Brettell LLP

(57) **Abstract**

A steady bearing assembly (5) for an agitator of a process vessel (1) is disclosed. The steady bearing assembly (5) comprises a housing assembly (9) and a bearing (13) disposed in the housing assembly (9). The housing assembly (9) is for attachment at an outlet (7) of the process vessel (1), external to a body (2) of the process vessel (1). The bearing (13) is configured to receive and support a shaft assembly (23) extending through the process vessel outlet (7). The process vessel (1) may be of the type used to handle fluids in preparation of chemical products, foods or paint. By providing the bearing (13) in the housing assembly (9), and arranging the housing assembly (9) such that it is external to the body (2) of the process vessel (1), the bearing (13) can be protected from any corrosive or abrasive properties of fluid contained within the process vessel body (2).

## Description

### TECHNICAL FIELD

The invention relates to bearing arrangements for process vessel agitators.

### BACKGROUND

Process vessels are used in many contexts to handle fluids, for example in preparation of chemical products, foods and ingredients. It is often necessary to agitate a fluid in a process vessel, for example to facilitate mixing of two or more phases (e.g. during crystallisation or mixing of particulates with a liquid). Typically, this is achieved by using a rotating agitator, in which a set of blades (e.g. radial/helical etc) are attached to a rotating agitator shaft that is mounted to a flange at the top of the process vessel. An arrangement of bearings or a gearbox assembly is provided at the top flange to support the agitator shaft for rotation about its axis, while constraining other movement of the agitator shaft.

In some cases, it may be difficult to properly constrain an agitator shaft in a process vessel. Where the process vessel is particularly tall, the agitator shaft must necessarily be long, and forces arising from blades near the tip of the agitator have a large moment arm at the bearing. Particularly viscous fluids are also problematic, since they tend to result in high forces and consequently high loads on the bearing arrangement or the gearbox at the top of the vessel. In addition, the loads that the bearing arrangement or the gearbox are capable of supporting limit the length of the blades of the agitator and the speed at which the agitator can rotate.

It is known to support an agitator shaft of a process vessel using a steady bearing in the form of a bushing at or near the base of the vessel, in addition to the top bearing. This has drawbacks, in the form of increased maintenance requirements. A steady bearing at or near the base of the process vessel is much more difficult to access for maintenance. It is typical to rely on the fluid within the process vessel to lubricate the bushing of a steady bearing. Where the fluid is corrosive or abrasive, the lifetime of the steady bearing may be limited. An example of a specific process where this is problematic is in crystallisation processes. The mixed phase fluid (solid crystals suspended in liquid solvent) that results from crystallisation tends to have a high effective viscosity. Other examples include mixing of paint, which includes abrasive mineral pigments.

### SUMMARY

According to an aspect of the invention there is provided a steady bearing assembly for an agitator of a process vessel. The steady bearing assembly comprises a housing assembly, for attachment at an outlet of the process vessel, external to a body of the process vessel, and a bearing disposed in the housing assembly and configured to receive and support a shaft assembly extending through the process vessel outlet.

The housing assembly may comprise an upper housing, for attachment to the process vessel outlet, and a lower housing coupled to the upper housing. The upper housing comprises a fluid inlet, for receiving fluid from the process vessel outlet and a fluid outlet.

The bearing may be housed within the lower housing, and configured to restrict movement of the shaft assembly in a radial direction, with respect to the axis of rotation of the shaft assembly, and to allow the shaft assembly to rotate with respect to the housing assembly. In such arrangements, the steady bearing assembly further comprises a seal configured to fluidly isolate the upper housing from the lower housing.

The steady bearing assembly may further comprise a shaft assembly extending through the fluid inlet to the bearing.

The shaft assembly may comprise a lower shaft supported by the bearing and extending into the upper housing, and an upper shaft coupled to the lower shaft in the upper housing and extending through the fluid inlet.

The seal may be a shaft seal around the lower shaft.

The steady bearing assembly may comprise an impeller configured to rotate within the upper housing in a fixed rotational relationship with the shaft assembly so as to impel fluid flow from the fluid inlet to the fluid outlet.

The direction of fluid discharge through the fluid outlet may be substantially perpendicular to a longitudinal axis of the shaft assembly.

The bearing comprises an upper bearing. In such arrangements, the steady bearing assembly further comprises a lower bearing axially offset, with respect to the axis of rotation of the shaft assembly, from the upper bearing. The lower bearing is configured to restrict movement of the shaft assembly in a radial direction, with respect to the axis of rotation of the shaft assembly, and to allow the shaft assembly to rotate with respect to the housing assembly.

The lower shaft may comprise an upper shoulder and a lower shoulder. The upper shoulder is configured to engage with the upper bearing to axially constrain, with respect to the axis of rotation of the shaft assembly, the shaft assembly in a first direction. The lower shoulder configured to engage with the lower bearing to axially constrain, with respect to the axis of rotation of the shaft assembly, the shaft assembly in a second direction.

The upper bearing and/or the second lower bearing may comprise at least two bearings that are axially offset with respect to the axis of rotation of the shaft assembly.

According to another aspect of the invention, there is provided a process vessel comprising a main shaft and the bearing assembly of the above described aspect of the invention. The main shaft is coupled to the shaft assembly of the steady bearing assembly via a coupling.

The coupling may comprise a spider coupling having a flexible element. The spider coupling is configured to restrict relative rotation between the main shaft and the shaft assembly.

The spider coupling may comprise a first portion, a second portion and a third portion. The first portion may comprise a first bore configured to receive an end of the main shaft, a first flange extending perpendicularly to a longitudinal axis of the first portion and defining a first face, and a first plurality of teeth extending in the direction of the longitudinal axis of the first portion, a gap being defined between each pair of teeth of the first plurality of teeth. The second portion may comprise a second bore configured to receive a first end of the shaft assembly, a second flange extending perpendicularly to a longitudinal axis of the second portion and defining a second face, and a second plurality of teeth extending in the direction of the longitudinal axis of the second, a gap being defined between each pair of teeth of the second plurality of teeth. The third portion may comprise a plurality of projections extending in a radial direction. The first face and the second face may be configured to mate such that each of the first plurality of teeth extends in to one of the second plurality of gaps and each of the second plurality of teeth extends in to one of the second plurality of gaps. Each of the plurality of projections may be configured to occupy a region defined between one of the first plurality of teeth and one of the second plurality of teeth.

The process vessel may further comprise a vessel body and a top bearing. The vessel body defines a first internal volume for containing a liquid, and defines the process vessel outlet. The top bearing is configured to restrict movement of the main shaft in a radial direction, with respect to the axis of rotation of the mane shaft, and to allow the main shaft to rotate with respect to the vessel body. The main shaft extends downward from the top bearing to the coupling.

The vessel body may comprise a conical or curved portion converging towards the process vessel outlet.

According to another aspect of the invention, there is provided a process vessel comprising a vessel body, defining a first internal volume for containing a liquid, a top bearing, a steady bearing assembly, and an agitator shaft extending downwards from the top bearing to the steady bearing assembly. The steady bearing assembly comprises a mounting body, a hub, a seal and a roller bearing. The mounting body is configured to secure the steady bearing assembly to the vessel body. The hub comprises a bore, an end of the agitator shaft being received in the bore, and is configured to couple to the agitator shaft to rotate with the agitator shaft. The seal is arranged between the mounting body and the hub, and defines a second internal volume fluidly isolated from the first internal volume. The roller bearing is configured to allow the hub to rotate relative to the mounting body while constraining radial movement of the hub, with respect to the axis of rotation of the agitator shaft, relative to the mounting body. The roller bearing is located within the second internal volume between the hub and the mounting body.

The roller bearing may comprise a plurality of cam follower bearings.

Each cam follower bearing may comprise a stud, roller bearings and a ring. In such arrangements, the stud is configured to be fixed stationary to the mounting body, the roller bearings are disposed between the ring and the stud, the ring is supported for rotation around the stud by the roller bearings, and the ring of each cam follower bearing is configured to contact the hub.

The steady bearing assembly may further comprise a centre stub and a plurality of rolling elements. In such arrangements, the centre stub comprises a groove defining a first bearing race, the hub comprises a second bearing race axially aligned, with respect to the axis of rotation of the agitator shaft, with the first bearing race, and the plurality of rolling elements are in contact with the first and second bearing races such that the hub is configured to rotate relative to the stub.

The rolling elements may comprise ball bearings, and the first bearing race, ball bearings and second bearing race together form a deep groove roller bearing.

The steady bearing assembly may comprise a second seal arranged between the hub and the centre stub, the second seal defining a third internal volume fluidly isolated from the second internal volume. In such arrangements, the first and second bearing races are located within the third internal volume.

The hub may comprise a through-bore extending from an outer surface of the hub to the second bearing race for inserting the rolling elements into the third internal volume.

The steady bearing assembly may comprise a removable plug for blocking the through-bore of the hub to isolate the first internal volume from the third internal volume.

The process vessel according to any embodiment of the invention described above may comprise an agitator blade configured to rotate about a longitudinal axis of the agitator shaft in a fixed rotational relationship with the main shaft.

### BRIEF DESCRIPTION OF THE DRAWINGS

Figure 1 shows a base portion of a process vessel with an external steady bearing assembly;
Figure 2 shows a schematic representation of a steady bearing assembly according to an embodiment;
Figure 3 shows a schematic representation of a steady bearing assembly according to an alternative embodiment;
Figure 4 shows a detail view of the steady bearing assembly of Figure 1;
Figure 5 shows a detail view of a coupling from the embodiment of Figure 1;
Figures 6a-c show end views of an upper and lower portion of the coupling for use in some embodiments, and a plan view of a flexible coupling element;
Figures 7a and 7b shows end views of upper and lower portions of a coupling for use in some embodiments;
Figure 8 shows a base portion of a process vessel comprising an internal steady bearing assembly according to an alternative embodiment;
Figure 9 shows a detail view of the steady bearing assembly of Figure 8;
Figure 10 shows a detail view of a mounting body of the steady bearing assembly of Figure 9;
Figure 11 shows a centre stud of the steady bearing of Figure 9; and
Figure 12 shows roller bearings for the centre stud of Figure 11.

### DETAILED DESCRIPTION

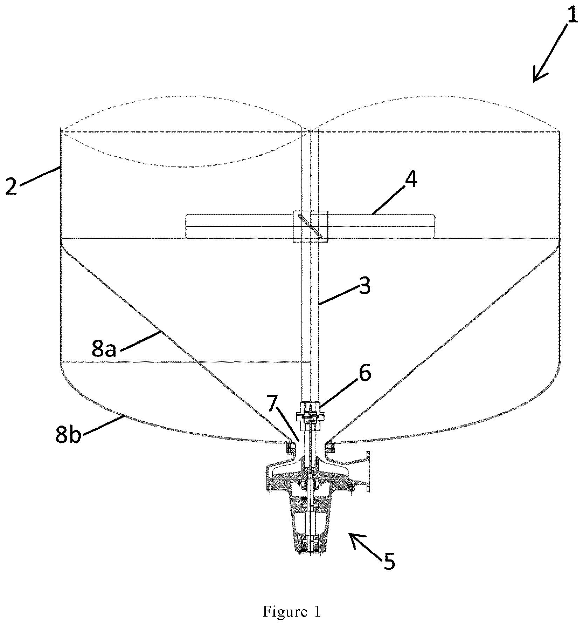

Figure 1 shows an example process vessel 1. In some embodiments, the process vessel 1 may be a crystalliser (e.g. such as is used in the production of phosphoric acid), in which crystals are formed in a solvent liquid by cooling the solvent within the vessel 1, but the invention is not restricted to crystallisers. The process vessel 1 comprises a vessel body 2 for retaining a solvent to be crystallised, a main shaft 3, an agitator blade set 4, a steady bearing assembly 5, and a coupling 6 which couples the main shaft 3 to the steady bearing assembly 5. The process vessel 1 further comprises a top bearing (not shown) which supports the main shaft 3 at an end of the main shaft 3 opposite to that which is supported by the steady bearing assembly 5.

The vessel body 2 defines a first internal volume within which a fluid is contained, in use. In the case of a crystalliser, the fluid may comprise a two phase mixture of crystals and solvent. In other embodiments the fluid may comprise a single liquid phase, or may comprise some other mixture of materials. In paint manufacturing, for example, the fluid may comprise solid pigment particles in suspension in a liquid. The vessel body 2 comprises a process vessel outlet 7 through which the fluid exits the vessel body 2, for example to flow to a subsequent stage of an industrial process. Figure 1 shows two alternatives of a lower portion of the vessel body 2; a conical lower portion 8a and a curved or hemi-spherical lower portion 8b. The selection of the lower portion 8a, 8b will depend on the solvent to be crystallised; for example if the solvent has a high viscosity then the conical lower portion 8a may be selected to encourage the flow of solvent through the process vessel outlet 7.

The main shaft 3 extends through the first internal volume. The main shaft 3 comprises a longitudinal axis which extends in parallel to a longitudinal axis of the vessel body 2. The agitator blade set 4 is mounted on the main shaft 3 and is configured to rotate in a fixed rotational relationship with the main shaft 3.

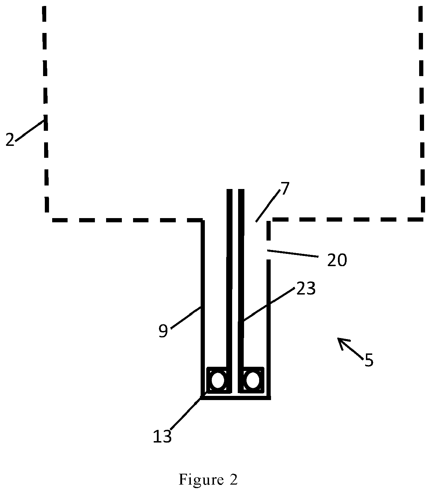

Figure 2 shows a schematic representation of a steady bearing assembly 5 in accordance with an embodiment. The lower portion of the vessel body 2 is shown for reference. The steady bearing assembly 5 comprises a housing assembly 9 for attachment to the process vessel outlet 7 (with fluid outlet 20), external to the process vessel body 2. A bearing 13 is housed within the housing assembly 9 and is configured to receive and support a shaft assembly 23 extending through the process vessel outlet 7.

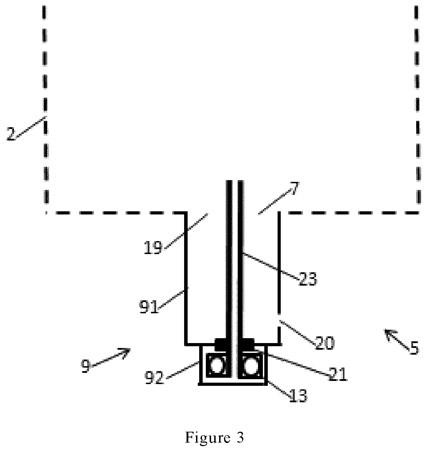

Figure 3 shows a schematic representation of a steady bearing assembly 5 in accordance with a further embodiment. The steady bearing assembly 5 comprises a housing assembly 9 comprising a lower housing 92 coupled to an upper housing 91. A bearing 13 is housed within the lower housing 92. The upper housing 91 is for attachment to the process vessel outlet 7 and comprises a fluid inlet 19, for receiving fluid from the process vessel outlet 7, and a fluid outlet 20. In use, fluid flows from the process vessel outlet 7 of the vessel body 2 (e.g. under gravity), in to the fluid inlet 19 of the upper housing 91, before flowing out of the fluid outlet 20 of the upper housing 91, for example to a subsequent stage of an industrial process.

The steady bearing assembly 5 of Figure 3 also comprises a shaft assembly 23 which is supported by the bearing 13 and which extends through the fluid inlet 19. The bearing 13 restricts movement of the shaft assembly 23 in an axial direction, i.e. in a direction parallel to the axis of rotation of the shaft assembly 23, and in a radial direction, i.e. in a direction perpendicular to the axis of rotation of the shaft assembly 23. A seal 21 is provided between the upper housing 91 and the lower housing 92 such that the housings 91, 92 are fluidly isolated from one another. In other words, fluid from the process vessel body 2 is inhibited, by the seal from entering the lower housing 92 from the upper housing 91, thereby protecting the bearing 13 from any corrosive or abrasive properties of the fluid.

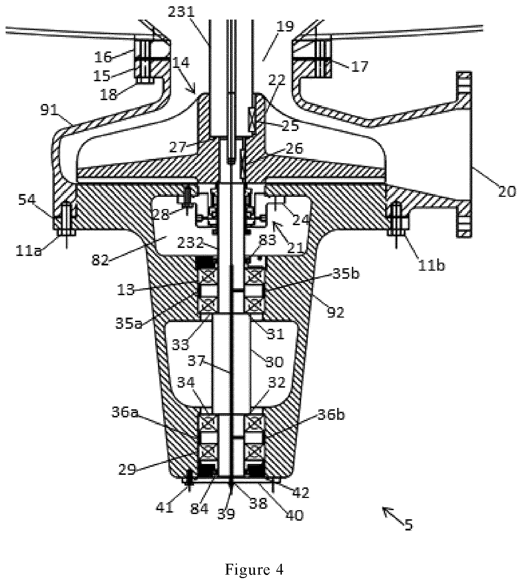

Figure 4 shows a detail view of the steady bearing assembly 5, of Figure 1, and the surrounding components of the process vessel 1. The upper and lower housings 91, 92 are fastened together with a suitable number of fasteners (such as screws, bolts or the like). Two fasteners 11a, 11b are shown in Figure 4. A gasket seal 54 is provided around the perimeter of the interface between the upper and lower housings 91, 92, the fasteners 11a, 11b extending through the gasket seal 54.

The steady bearing assembly 5 comprises an impeller 14 which is housed within the upper housing 91 and driven to rotate by the main shaft 3. The upper housing 91 comprises a flange 15 which is coupled with a flange 16 of the process vessel outlet 7. A gasket 17 is provided between the flanges 15, 16 and a suitable number of fasteners 18, such hex head screws, each extend through the flanges 15, 16 to mount the upper housing 91 to the process vessel outlet 7.

The shaft assembly 23 comprises an upper shaft 231 and a lower shaft 232. The lower shaft 232 is supported by the bearing 13, and extends from the lower housing 92 into the upper housing 9. The upper shaft 231 extends through the fluid inlet 19 and is coupled to the lower shaft 232 in the upper housing 9. In this example, the upper shaft 231 is coupled to the lower shaft within the impeller 14, but this is not essential.

In this example, the impeller 14 comprises a hub 22 which has a through-bore, i.e. a bore extending all the way through the hub 22 in the direction of a longitudinal axis of the hub 22. The upper and lower shafts 23, 232 are received within the through-bore.

In an alternative arrangement, the hub 22 comprises an upper bore and a lower bore, the upper and lower bores being separated by the body of the hub. The upper shaft 231 is received in the upper bore and the lower shaft 232 is received in the lower bore.

The upper shaft 231 is coupled to the hub 22 by means of a key 25 and a corresponding keyway and key seat. Similarly, the lower shaft 232 is coupled to the hub 22 by means of a key 26 and a corresponding keyway and key seat. In arrangements in which the hub 22 comprises a through-bore, an O-ring seal 27 may be provided within a gap between the upper and lower shafts 231, 232 within the through-bore of the hub 22.

Because the lower shaft 232 is supported by the first bearing 13 and the upper shaft 231 is coupled to the lower shaft 232 (in this example, via the impeller hub 22), the first bearing 13 restricts movement of the shaft assembly 23, in radial direction, and allows the shaft assembly 23 to rotate, with respect to the housing assembly 9.

The direction of fluid discharge through the fluid outlet 20 is substantially perpendicular to the longitudinal axis of the shaft assembly 23. In other words, the direction of fluid discharge is substantially perpendicular to the rotational axis of the impeller 14. The impeller 14 and upper housing portion 91 therefore act as a centrifugal pump to assist in displacement of fluid from the vessel body 2. This may be advantageous when the fluid has a high viscosity and the force of gravity alone is insufficient to provide a desired flow rate of the fluid from the vessel body 2.

The seal 21 in this embodiment comprises a shaft seal which provides a seal between the lower shaft 232 and a seal retainer 24. The seal retainer 24 is fastened to an internal surface of the lower housing 92 by fasteners 28. The seal retainer 24 comprises a bore through which the lower shaft 232 extends. The lower shaft 232 extends through the lower housing 92, through the seal 21 and into the impeller hub 22.

The seal 21 fluidly isolates the first housing 91 from a chamber 82 of the lower housing 92. A first bearing seal 83 fluidly isolates the chamber 82 and the portion of the lower housing 92 within which the first bearing 13 is housed. A potential flow path from the upper housing 91 to the first bearing 13 is therefore impeded by the seal 21, the chamber 82 and the first bearing seal 83. This provides added protection of the first bearing 13 compared to an arrangement, for example, in which only the seal 21 is provided.

In the arrangement of Figure 4, the bearing 13 is a first upper bearing 13. The steady bearing assembly 5 further comprises a first lower bearing 29 disposed in the lower housing 92 which supports the lower shaft 232 and is offset from the first bearing 13 in the axial direction.

In addition to the first upper and lower bearings 13, 29, second upper and lower bearings 33, 34 also support the lower shaft 232 within the lower housing portion 10. Spacers 35a, 35b are provided between the first and second upper bearings 13, 33, and spacers 36a, 36b are provided between the first and second lower bearings 29, 34. The lower shaft 232 further comprises an upper shoulder 31, which engages with the second upper bearing 34 to constrain movement of the lower shaft 232 in the upward axial direction, and a lower shoulder 32, which engages with the second lower bearing 34 to constrain movement of the lower shaft 232 in the downward axial direction.

Although pairs of upper and lower bearings are shown, in some embodiments there may be only a single upper bearing and a single lower bearing (which each may engage with a shoulder of the lower shaft 232 to constrain axial movement). In some embodiments a single bearing or group of bearings may be used.

A channel 37 extends longitudinally through the lower shaft 232, and is in fluid communication with the bearings 13, 29, 33, 34 and an outlet 38 located at the bottom of the lower housing 92. A plug 39 is provided to selectively seal and unseal the outlet 38. The arrangement of the channel 37 and the plug 39 allows lubricant to be drained from the bearings 13, 29, 33, 34 during servicing, and refilled by injection through the channel.

The lower housing 92 comprises an opening to enable the lower shaft 232 and the bearings 13, 29, 33, 34 to be inserted in to the lower housing 92 during assembly of the steady bearing assembly 5. A plate 40 is provided to cover the opening once the lower shaft 232 and the bearings 13, 29, 33, 34 have been inserted. A second bearing seal 84 is arranged between the opening of the lower housing 92 and the portion of the lower housing 92 within which the first lower bearing 29 is housed. A suitable number of apertures are provided in the plate 40. A fastener 41 (e.g. a hex head screw) extends through each aperture in to a corresponding bore in the lower housing 92 to fasten the plate 40 to the lower housing 92. A groove extends circumferentially around the opening, and an O-ring seal 42 is provided within the groove. The outlet 38 extends through the plate 40.

In some embodiments, the upper shaft 231 may comprise part of the main shaft 3, extending from the top of the process vessel, through the process vessel outlet 7. However, in order to simplify assembly, and enable retrofitting to existing agitator shafts, it may be advantageous to provide a coupling within the interior of the process vessel between the main shaft 3 and a separate upper shaft 231 of the steady bearing assembly 5.

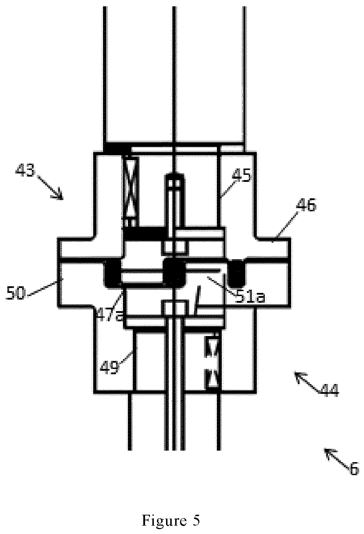

In some embodiments, the coupling 6 comprises a spider coupling 6 having a flexible element, as will be described in further detail below with reference to Figures 5 to 7.

The coupling 6 comprises first and second coupler hubs 43, 44. The first coupler hub 43 comprises a first bore 45, a first flange 46 and a first plurality of teeth 47a, 47b, 47c extending in the direction of the longitudinal axis of the first portion 43. A gap 48a, 48b, 48c is defined between each pair of teeth of the first plurality of teeth 47a, 47b, 47c. The second coupler hub 44 comprises a second bore 49, a second flange 50 and a second plurality of teeth 51a, 51b, 51c extending in the direction of the longitudinal axis of the second portion 52. A gap 52a, 52b, 52c is defined between each pair of teeth of the second plurality of teeth 51a, 51b, 51c. The first bore 45 receives an end of the main shaft 3 and the second bore 49 receives an end of the upper shaft 231 of the shaft assembly 23, 24. The ends of the main and upper shafts 3, 231 are retained within the first and second bores 45, 49, respectively, by respective keys, keyways and key seats.

Through the coupling 6, the upper shaft 231, the impeller hub 22, and the lower shaft 232, the first bearing 13 supports the main shaft 3, and restricts movement of the main shaft 3 in a radial direction, i.e. in a direction perpendicular to the longitudinal axis of the main shaft 3.

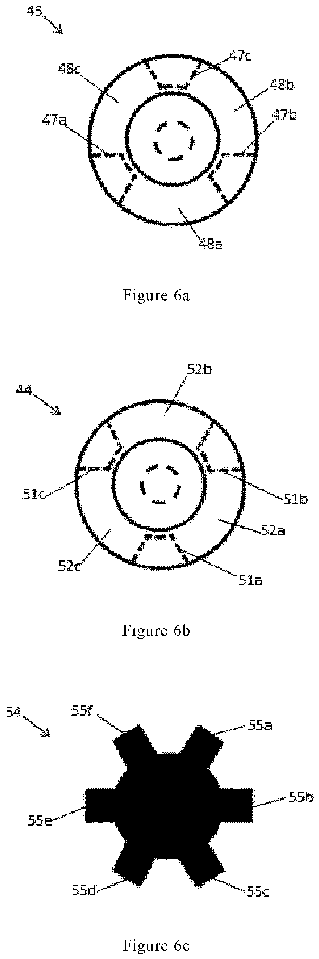

Figure 6a shows a schematic plan view of the first coupler hub 43 and Figure 6b shows a schematic plan view of the second coupler hub 44. The first and second coupler hubs 43, 44 each have a set of three teeth: 47a, 47b, 47c and 51a, 51b, 51c respectively. The teeth define the first and second pluralities of gaps: 48a, 48b, 48c and 52a, 52b, 52c respectively. In alternative arrangements, fewer or more teeth and corresponding gaps may be provided.

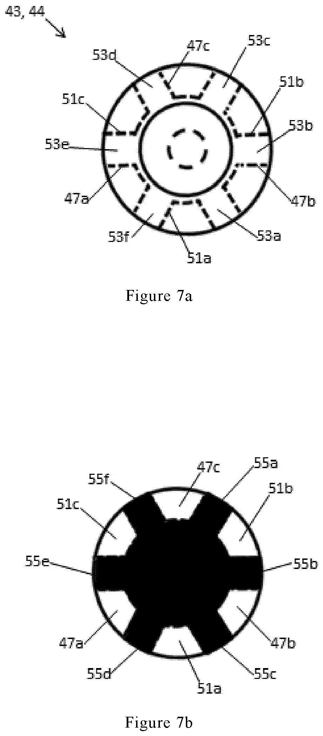

When assembled, as shown in Figure 7a, the first and second portions 43, 44 fit together. Each of the first plurality of teeth 47a, 47b, 47c extend in to one of the second plurality of gaps 52a, 52b, 52c, and each of the second plurality of teeth 51a, 51b, 51c extend in to one of the first plurality of gaps 48a, 48b, 48c. Each tooth only occupies a portion of a corresponding gap in the circumferential direction, thereby defining unoccupied regions 53a-f of the gaps between neighbouring teeth.

The coupling further comprises a flexible element 54 (shown in isolation in Figure 6c). The third portion 54 comprises a plurality of radial projections 55a-f. The number of projection 55a-f corresponds to the number of unoccupied regions 53a-f of the gaps when the first and second portions 43, 44 are assembled, with each projection 55a-f being configured to occupy a corresponding region 53a-f, as shown in Figure 7b. The flexible element 54 is formed of a resilient material, such as synthetic rubber, and acts to restrict relative rotation between the first and second coupler hubs 43, 44, and therefore between the main shaft 3 and the upper shaft 231. The flexible element 54 is therefore configured to dampen vibrations caused by rotation of the main shaft 3 and the shaft assembly 23. The coupling also accommodates any misalignment between the main shaft 3 and the shaft assembly 23.

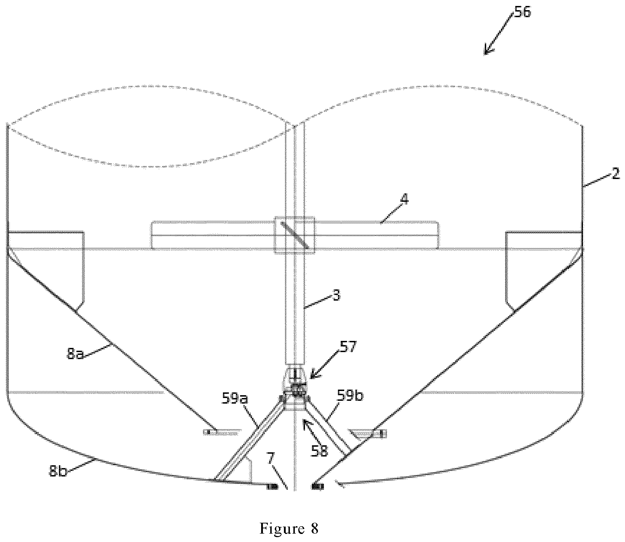

Figure 8 shows an alternative embodiment of a process vessel 56, comprising an interior steady bearing 57. The process vessel 56 shares a number of components with the process vessel 1 of Figure 1. Like reference numerals have been used to indicate like components.

The process vessel 56 comprises a top bearing (not shown) and a steady bearing assembly 57 located within the first internal volume (defined by the vessel body 2). The steady bearing assembly 57 is secured to the vessel body 2 by a mount 58 comprising three or more struts 59a-c (e.g. arranged as a tripod. Only two of the struts 59a, 59b are shown in Figures 6 and 7 for clarity. The main shaft 3 extends downwards from the top bearing to the steady bearing assembly 57.

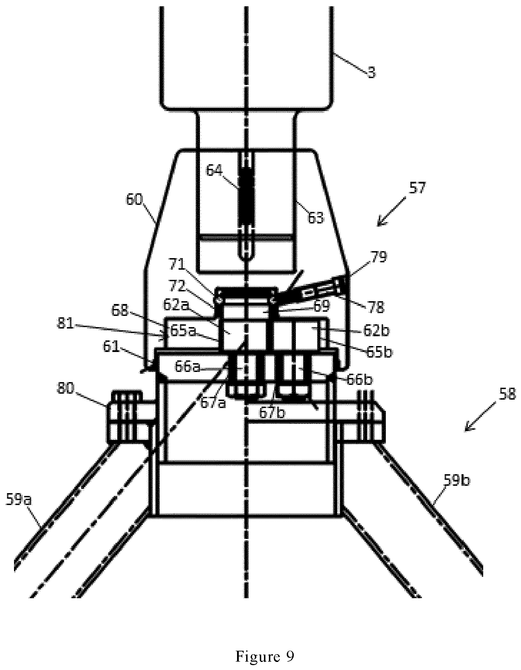

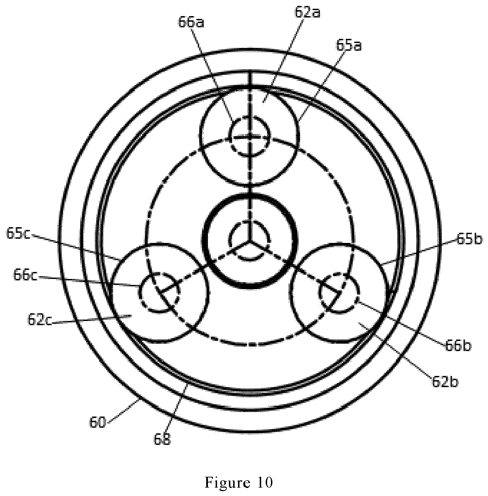

Referring to Figures 9 and 10, the steady bearing assembly 57 comprises a hub 60, mounting body 80, a seal 61 and a roller bearing 81. The roller bearing 81 comprises cam followers 62a, 62b, 62c. The cam followers 62a, 62b, 62c are shown in plan view in Figure 10; however the third cam follower 62c is omitted from Figure 9 for clarity.

The hub 60 comprises a bore 63 which receives an end of the main shaft 3. The end of the main shaft 3 is retained within the bore 63 by means of a drive key 64 (but other arrangements are also possible, such as the main shaft 3 comprising a threaded end portion received in a corresponding threaded portion of the hub 60 or a spline coupling). However it may be coupled, the hub 60 is configured to rotate in a fixed rotational relationship with the main shaft 3. The main shaft 3 and the hub 60 may be allowed to float axially, for example by at least 2mm.

The seal 61 is arranged between the mounting body 80 and the hub 60, and allows the hub 60 to rotate relative to the mounting body 80. The seal 60 defines a second internal volume that is fluidly isolated from the first internal volume. In other words, fluid within the process vessel body 2 is inhibited from entering the second internal volume and coming into contact with the roller bearing 81, which is within the second internal volume.

Each of the cam followers 62a, 62b, 62c comprises ring a 65a, 65b, 65c, a stud 66a, 66b, 66c and roller bearings (not shown). Each stud 66a, 66b, 66c is fixed stationary to the mounting body 80 by a nut on a threaded portion of the stud. The roller bearings are disposed between the stud 66a, 66b, 66c and the ring 65a, 66a, 66c of each cam follower 62, 62b, 62c, and the roller bearings support the ring for rotation around the stud. A bushing is provided between each cam follower stud 66a, 66b, 66c and the mounting body 80.

The roller bearings are provided with lubricant and are sealed between the stud 66a, 66b, 66c and the ring 65a, 66a, 66c of each cam follower 62, 62b, 62c, such that the roller bearings are fluidly isolated form the second internal volume. A potential flow path from the first internal volume to the roller bearings is therefore impeded by the seal 61, the second internal volume and the sealing of the roller bearings between the respective studs 66a, 66b, 66c and rings 65a, 66a, 66c. This provides added protection of the roller bearings compared to an arrangement, for example, in which only the sealing of the roller bearings between the respective studs 66a, 66b, 66c and rings 65a, 66a, 66c is provided.

The hub 60 comprises an inner surface defining a bearing race 68 in contact with the rings 65s, 65b, 65c of the cam followers 6a, 62b, 62c. This allows the hub 60 to rotate relative to the mounting body 80, which therefore allows the main shaft 3 to rotate relative to the vessel body 2.

The mounting body 80 is fixed to the mount 58, for example with threaded fasteners.

The steady bearing assembly 57 further comprises a centre stub 69 which is fixed to the mounting body 80. In this example the stub 69 comprises a threaded portion, and is bolted to the mounting body 80 from below. Other arrangements are also possible: for example, the stub may be integrally formed with the mounting body 80, or provided with a threaded portion that is received in a corresponding threaded portion of the mounting body 80.

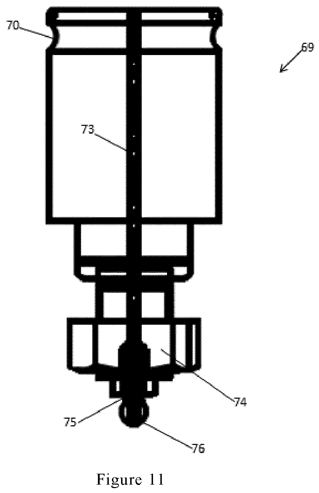

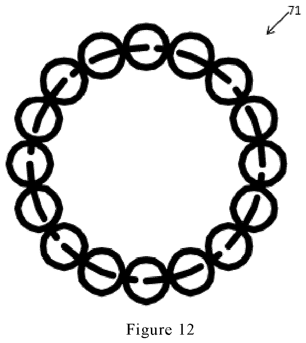

As shown in Figure 11, the stub 69 comprises a groove 70 defining a bearing race. The hub 60 comprises a corresponding groove defining a second bearing race (as depicted in Figure 9) which is axially aligned with the bearing race of the stub 69. A plurality of rollers71 comprising ball bearings, shown in plan view in Figure 12, are provided in contact with the bearing race of the stub 69 and the corresponding bearing race of the hub 60 to support the hub 60 in rotation relative to the stub 69. The rollers and the races together may define a deep groove bearing that is capable of reacting axial loads, so as to maintain the hub 60 in a fixed axial position relative to the mounting body 80.

A second seal 72 is provided between the hub 60 and the stub 69, the second seal 72 defining a third internal volume which is fluidly isolated from the second internal volume. The bearing race of the stub 69, the corresponding bearing race of the hub 60, and the plurality of rolling elements 71 are all located within the third internal volume. When the steady bearing assembly 57 is assembled, the third internal volume is filled with lubricant to allow the second bearing race of the hub 60 to roll smoothly over the rolling elements 71, and allow the rolling elements 71 to roll smoothly over the bearing race of the stub 69. A potential flow path from the first internal volume to the third internal volume is impeded by the seal 61, the second internal volume and the second seal 72. This provides added protection of the bearing race of the stub 69, the corresponding bearing race of the hub 60, and the plurality of rolling elements 71 compared to an arrangement, for example, in which only the second seal 72 is provided.

As shown in Figure 11, the stub 69 comprises a channel 73 in fluid communication with the groove 70. The channel 73 extends from the groove 70, through a fastener 74, provided to fasten the stub 69 to the mounting body 80, and to an outlet 75. A plug 76 is provided to selectively seal and unseal the outlet 75. The arrangement of the channel 73 and the plug 76 allows lubricant to be drained or refilled from the third internal volume during servicing.

Referring back to Figure 9, the hub 60 comprises a through-bore 78 extending from an outer surface of the hub 60 to the third internal volume. The through-bore 78 enables the rolling elements 71 to be inserted in to the third internal volume after the hub 60 is located over the cam followers disposed in the mounting body 80. A removable plug 79 is provided to seal the through-bore 78 from the first internal volume (the internal volume defined by the vessel body 2).

In the example described above, the roller bearing comprises cam followers, but in other embodiments, different types of bearings may be used. Cam followers may be advantageous because they typically comprise relatively thick rings that are capable of tolerating misalignment (e.g. between the hub 60 and mounting body 80). The rings may also be profiled (i.e. curved along the axial direction), which tends to reduce contact stresses when there is misalignment.

Although detailed embodiments have been described, it will be understood that variations are possible, and the scope of the invention should be determined with reference to the accompanying claims.

## Claims

1. A steady bearing assembly for an agitator of a process vessel, comprising:
a housing assembly for attachment at an outlet of the process vessel, external to a body of the process vessel; and
a bearing disposed in the housing assembly and configured to receive and support a shaft assembly extending through the process vessel outlet.

2. The steady bearing assembly of claim 1, wherein the housing assembly comprises:
an upper housing for attachment to the process vessel outlet and comprising a fluid inlet for receiving fluid from the process vessel outlet, and a fluid outlet; and
a lower housing coupled to the upper housing.

3. The steady bearing assembly of claim 1 or claim 2, further comprising a shaft assembly extending through the fluid inlet to the bearing, wherein the shaft assembly optionally comprises a lower shaft supported by the bearing and extending into the upper housing, and an upper shaft coupled to the lower shaft in the upper housing and extending through the fluid inlet.

4. The steady bearing assembly of claim 2, or claim 3 when dependent on claim 2, wherein the bearing is housed within the lower housing, the bearing configured to restrict movement of the shaft assembly in a radial direction, and to allow the shaft assembly to rotate with respect to the housing assembly, the steady bearing assembly further comprising a seal configured to fluidly isolate the upper housing from the lower housing, wherein the seal is optionally a shaft seal around the lower shaft.

5. The steady bearing assembly of any preceding claim, comprising an impeller configured to rotate within the upper housing in a fixed rotational relationship with the shaft assembly so as to impel fluid flow from the fluid inlet to the fluid outlet.

6. The steady bearing assembly of any preceding claim, wherein the direction of fluid discharge through the fluid outlet is substantially perpendicular to a longitudinal axis of the shaft assembly.

7. The steady bearing assembly of any preceding claim, wherein the bearing comprises an upper bearing, and the steady bearing assembly further comprises a lower bearing axially offset from the upper bearing, the lower bearing configured to restrict movement of the shaft assembly in a radial direction, and to allow the shaft assembly to rotate with respect to the housing assembly, wherein the lower shaft optionally comprises an upper shoulder and a lower shoulder, the upper shoulder configured to engage with the upper bearing to axially constrain the shaft assembly in a first direction, and the lower shoulder configured to engage with the lower bearing to axially constrain the shaft assembly in a second direction, and/or the upper bearing and/or the lower bearing optionally comprise at least two bearings that are axially offset.

8. A process vessel, comprising a main shaft and the steady bearing assembly of any preceding claim, wherein the main shaft is coupled to the shaft assembly of the steady bearing assembly via a coupling, wherein the coupling optionally comprises a spider coupling having a flexible element, the spider coupling configured to restrict relative rotation between the main shaft and the shaft assembly.

9. The process vessel of claim 8, comprising:
a vessel body defining a first internal volume for containing a liquid, the vessel body defining the process vessel outlet; and
a top bearing configured to restrict movement of the main shaft in a radial direction, and to allow the main shaft to rotate with respect to the vessel body;
wherein the main shaft extends downward from the top bearing to the coupling.

10. The process vessel of claim 8 or claim 9, wherein the vessel body comprises a conical or curved portion converging towards the process vessel outlet.

11. A process vessel, comprising:
a vessel body defining a first internal volume for containing a liquid;
a top bearing;
a steady bearing assembly; and
an agitator shaft extending downwards from the top bearing to the steady bearing assembly; wherein
the steady bearing assembly comprises:
a mounting body configured to secure the steady bearing assembly to the vessel body;
a hub comprising a bore, an end of the agitator shaft received in the bore, the hub configured to couple to the agitator shaft to rotate with the agitator shaft;
a seal between the mounting body and the hub, the seal defining a second internal volume fluidly isolated from the first internal volume; and
a roller bearing configured to allow the hub to rotate relative to the mounting body while constraining radial movement of the hub relative to the mounting body; wherein
the roller bearing is located within the second internal volume between the hub and the mounting body.

12. The process vessel of claim 11, wherein the roller bearing comprises a plurality of cam follower bearings, wherein each cam follower bearing optionally comprises: a stud, roller bearings and a ring; wherein: the stud is configured to be fixed stationary to the mounting body, the roller bearings are disposed between the ring and the stud, the ring is supported for rotation around the stud by the roller bearings, and the ring of each cam follower bearing is configured to contact the hub.

13. The process vessel of claim 11 or claim 12, wherein the steady bearing assembly further comprises:
a centre stub fixed to the mounting assembly, the centre stub comprising a groove defining a first bearing race, and the hub comprising a second bearing race axially aligned with the first bearing race; and
a plurality of rolling elements in contact with the first and second bearing races such that the hub is configured to rotate relative to the stub, wherein the rolling elements optionally comprise ball bearings, and the first bearing race, ball bearings and second bearing race together form a deep groove roller bearing.

14. The process vessel of claim 13, wherein the steady bearing assembly comprises:
a second seal arranged between the hub and the centre stub, the second seal defining a third internal volume fluidly isolated from the second internal volume; wherein
the first and second bearing races are located within the third internal volume, wherein the hub optionally comprises a through-bore extending from an outer surface of the hub to the second bearing race for inserting the rolling elements into the third internal volume, wherein the steady bearing assembly optionally comprises a removable plug for blocking the through-bore of the hub to isolate the first internal volume from the third internal volume.

15. The process vessel of any of claims 11 to 14, comprising an agitator blade configured to rotate about a longitudinal axis of the agitator shaft in a fixed rotational relationship with the main shaft.
